(19) **Europäisches Patentamt European Patent Office Office européen des brevets**

(11) **EP 4 708 330 A1**

(12) **EUROPEAN PATENT APPLICATION**

(43) Date of publication:
**11.03.2026 Bulletin 2026/11**

(21) Application number: **24198949.0**

(22) Date of filing: **06.09.2024**

(51) International Patent Classification (IPC):
**G21K 1/00** $^{(2026.01)}$  **G06N 10/40** $^{(2022.01)}$

(52) Cooperative Patent Classification (CPC):
**G21K 1/00; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Infineon Technologies Austria AG
9500 Villach (AT)**

(72) Inventors:
• **DIXIUS, Leon Minh
  81829 München (DE)**

• **BRANDL, Matthias
  85614 Kirchseeon (DE)**
• **REPP, Jens
  85570 Markt Schwaben (DE)**
• **COLOMBE, Yves
  9500 Villach (AT)**

(74) Representative: **Infineon Patent Department
Intellectual Property
Infineon Technologies AG
Postfach 22 16 44
80506 München (DE)**

(54) **AN ION TRAP DEVICE**

(57) A mechanism for determining a measure of capacitance of one or more electrodes (110) of an ion trapping device (100). The ion trapping device comprises a plurality of electrodes (110) and a capacitance measurement device (312), which are formed in a same integrated circuit (310). The capacitance measurement device determines a measure of capacitance of a (sub-) set of the plurality of electrodes.

FIG. 3

**Description**

## TECHNICAL FIELD

The present disclosure relates to the field of ion traps that can be used for quantum computing or atomic clocks, for example, and in particular, to electronic circuits of an ion trap that include electrodes.

## BACKGROUND

There is growing interest and rapid development in the field of quantum computing. One particular type of quantum computing environment is a trapped ion environment, in which computing is performed using ions as qubits for computation. The excitation state of an electron of an ion indicates a logical value or logic state. Ions such as barium (Ba), magnesium (Mg), calcium (Ca), beryllium (Be), or the like, may be positively charged, and an electron in the outer shell of the ion used as the logic element. Two or more ions may be entangled, as changing the state of one qubit causes the entangled qubits to change their state immediately, having the potential to provide substantial speed and power savings over conventional computing.

Quantum computing requires a well-controlled environment, and precise handling of the ions. Generally, ions in a trapped ion device, also referred to as a trapped ion quantum computing (TIQC) system, are trapped or controlled using electromagnetic fields defined using a plurality of electrodes. For example, ions may be moved between locations (e.g., storage, processing and readout locations) in a process called ion shuttling.

In order to control the ion movement, electrodes are controlled to provide an intended electromagnetic field (EM-field). It is therefore important that the electrical connection to electrodes are reliable to ensure accurate control of the EM-fields created by the electrodes in the trapped ion device.

## SUMMARY

There is provided a device for trapping one or more ions comprising an integrated circuit comprising: a plurality of electrodes controllable, using one or more applied voltages, for positioning the one or more ions with respect to the device; and a capacitance measurement device electrically connected or connectable to each electrode of a first set of the plurality of electrodes and configured to generate, for each electrode of the first set of the plurality of electrodes, a measure of capacitance for the electrode .

Those skilled in the art will recognize additional features and advantages upon reading the following detailed description, and upon viewing the accompanying drawings.

## BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.

Fig. 1 illustrates a portion of a device for trapping one or more ions;
Fig. 2 illustrates a portion of another device for trapping one or more ions;
Fig. 3 illustrates a portion of a proposed device;
Fig. 4 illustrates a portion of another proposed device;
Fig. 5 illustrates a portion of another proposed device;
Fig. 6 illustrates a portion of yet another proposed device;
Fig. 7 illustrates a portion of yet another proposed device;
Fig. 8 illustrates a structure of a proposed device; and
Fig. 9 illustrates a proposed method.

## DETAILED DESCRIPTION

The examples described herein provide a mechanism for determining a measure of capacitance of one or more electrodes of an ion trapping device. The ion trapping device comprises a plurality of electrodes and a capacitance measurement device, which are formed in a same integrated circuit. The capacitance measurement device determines a measure of capacitance of a (sub-)set of the plurality of electrodes.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

Throughout this disclosure, ordinal numbers (e.g. "first", "second" and so on) have been used purely to distinguish different elements from one another for the sake of clarity, and reference to a non-"first" (e.g. "second" or "third") element does not necessitate that a "first" element be present. The skilled person would be capable of relabeling any such elements as appropriate (e.g. relabeling a "second" element as a "first" element if only the second element is present).

In the context of the present disclosure, when a switch is closed, it permits or allows the flow of current therethrough. When a switch is opened, it prevents or restricts the flow of current therethrough. A closed switch may be considered to be "on" or in an on-state. An opened switch may be considered to be "off" or in an off-state.

In the context of the present disclosure, a measure of capacitance of an electrode is a value that changes responsive to the capacitance of the electrode.

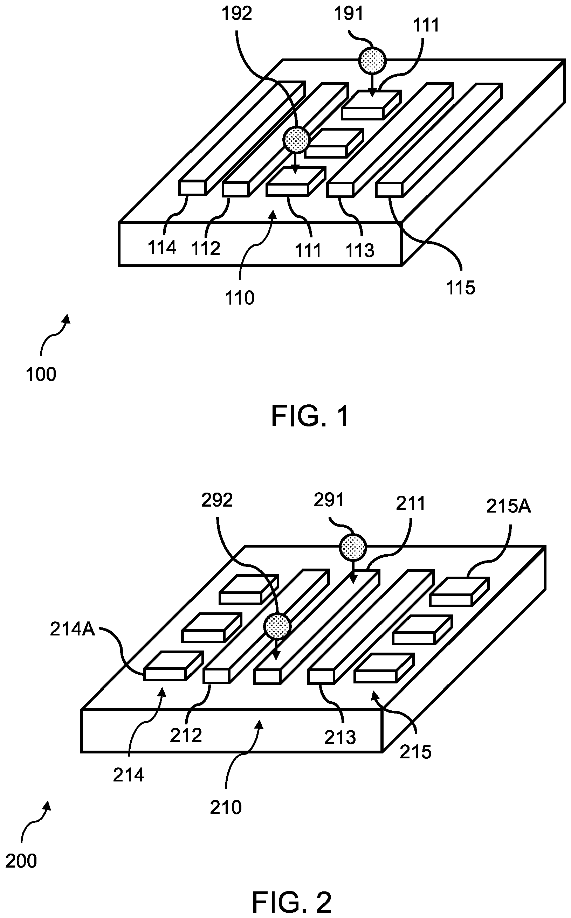

Fig. 1 conceptually illustrates a portion of a device 100 for trapping one or more ions, also known as an ion trap device, for improved contextual understanding.

The device 100 comprises a plurality of electrodes 110 configured to selectively position (i.e., trap and/or move) a respective ion 191, 192 in each of a plurality of different ion trap locations or zones. The structure and configuration of suitable ion trapping arrangements are well known in the art.

The plurality of electrodes employ electric and/or magnetic fields to trap an ion. In particular, by selectively applying voltages to the plurality of electrodes it is possible to define electric or electromagnetic fields that can be used to trap and/or manipulate the position of one or more ions with respect to the device

Here, the illustrated plurality of electrodes comprises a central DC electrode 111 for each ion trap location 191, 192. Each ion trap location may lie in the vicinity (e.g., above) the corresponding central DC electrode. Each central DC electrode 111 may be arranged between two RF electrodes 112, 113, wherein (in use) a voltage applied to the RF electrodes is controlled to maintain the position of the ion within the ion trap location. The plurality of electrodes 110 may further comprise ground electrodes 114, 115 at either side of the array of the central DC electrode(s) 111 and the RF electrodes 112, 113. In use, the voltage of the DC electrodes 111 and/or the RF electrodes 112, 113 may be manipulated to control a movement of the trapped ion, e.g., between different ion trap locations or zones.

Each of the plurality of electrodes may be connected or connectable to one or more voltage sources. The DC electrodes may be connected or connectable to one or more DC voltage sources (not visible in Fig. 1). Similarly, the RF electrodes may be connected or connectable to one or more RF voltage sources. The ground electrodes may be connected to a ground potential or earth. The electric wiring for the electrodes is not illustrated in Fig. 1

Fig. 2 conceptually illustrates a portion of another device 200 for trapping one or more ions, for improved contextual understanding.

The device 200 differs from the previously described device 100 (Fig. 1) in the configuration and arrangement of the plurality of electrodes. In the device 200, the plurality of electrodes 210 comprises a central ground electrode 211, which is flanked by (i.e., arranged between) two RF electrodes 212, 213. The RF electrodes may similarly be positioned between two rows of DC electrodes. Each ion trap location 291, 292 is defined by a respective pair of DC electrodes. In this context, a pair of DC electrodes 214A, 215B comprises a DC electrode from each row. Each ion trap location is in the vicinity (e.g., above) the central ground electrode 211, and lying between a respective pair of DC electrodes.

Connections to any voltage sources and/or ground potential or earth may be as described for the earlier described device 100 (Fig. 1).

The skilled person will appreciate that the illustrated examples of a device for trapping ions comprising a plurality of electrodes are non-exhaustive, and that there are a wide variety of other designs, arrangements and/or configurations of devices for trapping ions using a plurality of electrodes that operate on similar principles. Of course, dependent upon the precise implementation detail, the plurality of electrodes may comprise one or more additional electrodes and/or components (e.g., for generating magnetic fields and/or compensating for error in the generation of any field(s)).

During manufacture of a device for trapping one or more ions, there is a risk that one or more of the plurality of electrodes will become electrically disconnected from the remainder of the electrical circuitry of the device, e.g., from the electric wiring to/from the electrode(s). In other words, there is a risk that one or more of the plurality of electrodes will be (electrically) floating electrodes. There is also a risk that one or more of the plurality of electrodes will be shorted, e.g., to another one of the plurality of electrodes or to a ground/reference voltage. Both of these risks has the potential to deteriorate functionality of the device for trapping one or more ions.

There is also a risk that one or more of the plurality of electrodes may become disconnected during use of the ion trap device. This may, for instance, be due to delamination of one or more layers of the ion trap device resulting from thermal cycling or similar effects.

It would be advantageous to facilitate the identification of any (electrically) disconnected, floating or shorted electrodes, i.e., to identify defects in the electrode(s).

Some known electrode defect detection approaches employ thermography techniques, scanning magnetic microscopy techniques and/or optical beam induced resistance change techniques to identify defects in the electrodes.

Another known approach to identifying defects in one or more electrodes is proposed by Kehayias, Pauli, et al. "Fault Localization in a Microfabricated Surface Ion Trap using Diamond Nitrogen-Vacancy Center Magnetometry." arXiv preprint arXiv:2403.08731 (2024). In this approach, imaging magnetometry is employed to image current flow (e.g., to electrodes) by measuring the magnetic field. Defects in the electrodes are detected based on the output magnetic image.

The present disclosure recognizes that existing fault detection techniques require significant and expensive external equipment, and are relatively slow to execute and perform on a large scale. In particular, the existing techniques share a same disadvantage of requiring individual interrogation of the ion trap device using an expensive and complex piece of equipment to perform fault detection. This may significantly impact the scalability of fault detection for large numbers of ion trap device.

The present disclosure provides an alternative approach for performing fault detection of electrodes of an ion trap device.

In particular, it has been herein recognized that electrodes of an ion trap device will be associated with a corresponding capacitance. In some cases, this capacitance is intrinsic to the electrode(s), i.e., is a parasitic capacitance between the electrode and a ground. In other cases, the capacitance includes a capacitance of a dedicated electrode capacitor (i.e., a specific electrical component) connected between the electrode and a ground. This capacitance may be exploited to maintain a voltage at an electrode, e.g., whilst allowing a voltage source to disconnect from the electrode. For example, the voltage at the electrode may be used to control (such as trap and/or move) one or more ions. Other advantageous uses for a capacitance of an electrode are known to the skilled person, e.g., for aiding in the performance of an RF shunt for some forms of ion trap device.

It is herein proposed to integrate a capacitance measurement device into the ion trap device. The capacitance measurement device is electrically connected or connectable to each electrode of a first set of the plurality of electrodes. The capacitance measurement device is configured to generate, for each electrode of the first set of the plurality of electrodes, a measure of capacitance for the electrode.

The first set of electrodes comprises at least one electrode, e.g., a plurality of electrodes. In some examples, the first set of electrodes comprises all of the electrodes of the device. In other examples, the first set of electrodes comprises a subset (i.e., not all) of the electrodes of the device.

The first set of the plurality of electrodes may, for instance, comprise at least (e.g., only) the DC electrodes of the plurality of electrodes. These may be the electrodes that control the positioning and/or movement of the ion(s), whose operation is most sensitive to errors or faults in capacitance whose capacitance is therefore most important to determine.

Each measure of capacitance is responsive or indicative of any fault(s) in the respective electrode. More particularly, it is recognized that the capacitance of an electrode will change (e.g., deviate from a desired capacitance) if there is a fault in the electrodes.

For instance, if the electrode is shorted to ground, then the capacitance of the electrode will be significantly lower (e.g., negligible) compared to if the electrode is not shorted to ground. As another example, if the electrode is shorted to another electrode, then the capacitance of the electrode will increase compared to if the electrode is not shorted to another electrode. As yet another example, if the electrode is disconnected from other electrical circuitry, then the measured capacitance will be lower (as the capacitance of the electrode will not contribute to the measure of capacitance).

Thus, by processing the measure of capacitance for an electrode, it is possible to generate an indicator of a fault for the electrode. In particular, the measure of capacitance is itself indicative of whether or not there is a fault at the electrode.

The proposed approach facilitates identification of a fault in the electrode(s) of an ion trap device without requiring any additional connection to the outside of the system and without requiring the use of sophisticated imaging methods. By building the capacitance measurement device into the system, it can be easily automized and can speed up testing time significantly, facilitating scalability of manufacturing ion trap devices.

For the sake of illustrative clarity, in the following illustrated portions of proposed devices only the relevant components for a single electrode of the ion device are illustrated. However, the skilled person would readily understand how similar components may be shared or separately provided for different electrodes.

The present disclosure provides techniques for use in determining whether or not there is a fault in an electrode (e.g., a disconnection or similar). In this regard, when an element is described or defined as being connected to an electrode, it will be appreciated that this connection is an intended or designed connection which may, in practice, be non-existent due to a fault. Similarly, when a property of the electrode (e.g., voltage at an electrode or a capacitance of an electrode) is indicated, then this refers to an attempted measure of the property that is correctly performed when the electrode is connected (which may not, in practice, be possible due to a disconnection of the electrode).

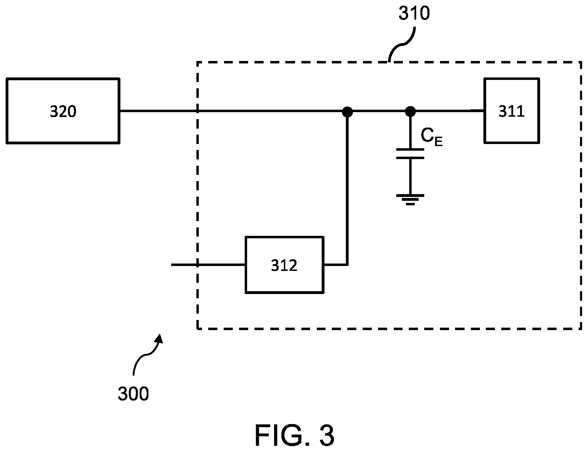

Fig. 3 illustrates a portion of an example of a proposed device 300 for trapping one or more ions.

The device 300 comprises an integrated circuit 310. The integrated circuit 310 comprises the plurality of electrodes 311 (of which only one is illustrated) and the capacitance measurement device 312. Each electrode has an associated capacitance.

In the illustrated example, the integrated circuit 310 comprises an electrode capacitor $C_E$ for each electrode 311 that defines or contributes to the capacitance of the electrode 311. In other examples, the electrode capacitor $C_E$ may be omitted, e.g., if the intrinsic capacitance of the electrode 311 is sufficient to perform the desired function(s).

The electrode(s) 311 and the capacitance measurement device 312 are therefore formed in a same integrated circuit 310. The electrode(s) and the capacitance measurement device 312 may be located in a same layer of the integrated circuit 310 (e.g., mounted to a same substrate) or may be located on different layers (e.g., mounted to different substrates) of the integrated circuit 310.

Thus, the integrated circuit 310 may comprise a first substrate configured to mount the plurality of electrodes 311; and a second substrate, different to the first substrate, configured to mount electronic circuitry comprising each switching device and the capacitance measurement device 312.

The device 300 may further comprise at least one voltage control arrangement 320, which is configured to control a voltage provided to the electrodes 311. In the illustrated example, a single voltage control arrangement 320 is directly connected to the electrode(s) 311, e.g., to directly control the voltage provided to the electrode 311.

The capacitance measurement device 312 is here electrically connected to the electrode 311. The capacitance measurement device 312 is configured to generate, for the electrode 311, a measure of capacitance for the electrode 311.

A first capacitance measurement process for generating the measure of capacitance for an electrode 311 (e.g., each electrode of the first set of electrodes) of illustrated device 300 is hereafter described. In this first capacitance measurement process, the voltage control arrangement 320 and the capacitance measurement device 312 cooperate to produce the measure of capacitance.

The first capacitance measurement process comprises performing the following in sequence: defining, as an initial voltage, a voltage at the electrode 311; using the voltage control arrangement 320 to apply a voltage signal to the electrode 311, the voltage signal having a different voltage to the initial voltage and using the capacitance measurement device 312 to define, as the measure of capacitance, a value responsive to a length of time taken for the voltage at the electrode 311 to follow the voltage of the applied voltage signal. More particularly, a length of time taken for the voltage at the electrode 311 to follow the voltage of the applied voltage signal indicates the capacitance of the electrode 311.

This implementation is based on a dynamic measurement of the charge/discharge of the electrode's capacitance. To this end, a voltage signal (e.g., providing a voltage step function) is applied to the electrode 311. Due to the finite on-resistance of the electrical connection to the electrode 311, the response of the electrode 311 to the voltage signal will show a low-pass behavior and will reach a certain voltage only after some delay with respect to the voltage of the voltage signal. This delay will be shorter when the capacitance of the electrode 311 is lower or missing (e.g., the electrode is not connected). The capacitance measurement device 312 is configured to measure or monitor the voltage at the electrode 311.

The measurement may be performed after a defined delay from providing the voltage signal, and the corresponding voltage can be used to define the capacitance measurement (and thereby determine whether there is a fault in the electrode). Thus, in some examples, the measure of capacitance is a measure of the voltage at the electrode 311 after a predetermined length of time has elapsed since performing the step of using the voltage control arrangement 320 to apply a voltage signal to the electrode 311. The difference between the initial voltage and the measure of the voltage will change responsive to the measurable capacitance of the electrode 311.

Alternatively, it is also possible to measure the length of time required until the voltage response crosses a threshold voltage. Thus, in some examples, the capacitance measurement device is configured to define the measure of capacitance as the length of time taken for the voltage at the electrode 311 to reach a predetermined voltage having a value either between the initial voltage and the voltage of the voltage signal or at the voltage of the voltage signal.

The defining of the initial voltage may comprise applying a predetermined voltage to the electrode 311. Alternatively, the initial voltage may be an arbitrary voltage, e.g., detected by the capacitance measurement device 312.

In some examples, the capacitance measurement device 312 comprises an analogue-to-digital converter (ADC) configured to receive, as input, an analogue signal representing the voltage at the electrode 311. This is converted into a digital representation of the voltage, which can itself represent the measure of capacitance or be further (digitally) processed to produce the measure of capacitance.

In particular, an input to the ADC may be directly connected to a wired connection to the electrode 311 (as illustrated). This allows for direct monitoring of the voltage at the electrode 311 (or at the wired connection that should be connected to the electrode 311). This allows for digital determination of the measure of capacitance. In other words, the measure of capacitance may be a digital measure of capacitance, here produced by monitoring the voltage at an input to the analogue-to-digital converter. This digital measure of capacitance can be processed or used to predict or determine whether or not there is a fault in the electrode 311 (e.g., by comparison to one or more reference measures of capacitance each indicating a desired measure of capacitance or an undesired measure of capacitance).

In other examples, the capacitance measurement device 312 comprises a comparator. The comparator may be configured to compare the voltage at the electrode 311 (here: functioning as a measure of capacitance) to a reference measure of capacitance. Any suitable known example of a comparator, such as those that employ one or more operational amplifiers, may be employed. This produces a binary indicator that indicates whether or not the measure of capacitance breaches the reference measure of capacitance.

It will be appreciated that by appropriate selection of the reference measure of capacitance and sampling the binary indicator after a predetermined period of time after applying the voltage signal (or by determining the length of time until the binary indicator changes), the sample of the binary indicator can indicate whether or not there is a fault in the electrode 311.

In particular, the reference voltage may be selected to correspond to an expected voltage that would be present if there were no fault(s) in the electrode 311 - which can be determined in advance.

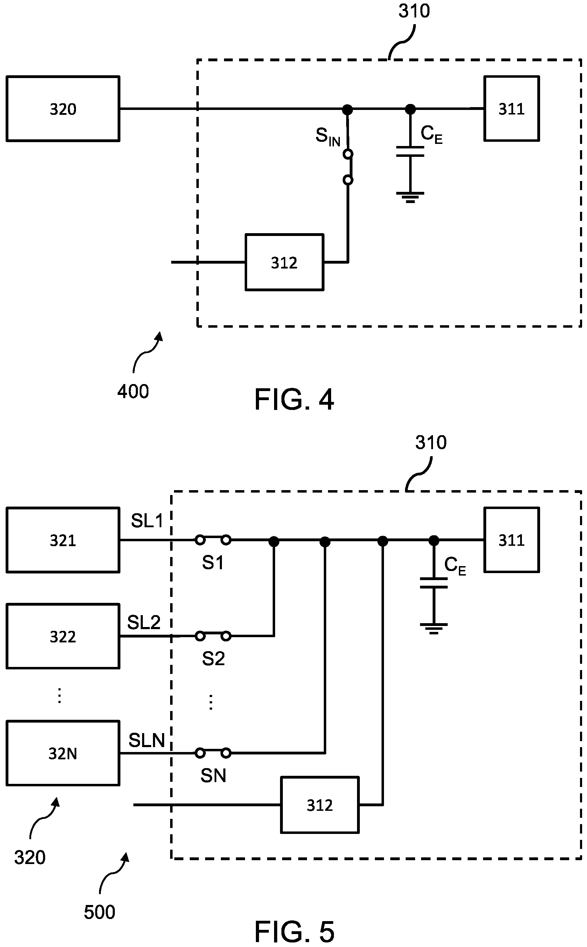

Fig. 4 illustrates a portion of a variant example of the proposed device 400. The proposed device 400 differs from the previously described proposed device 300 (Fig. 3) by way of an intermediate switch $S_{IN}$ connected between the electrode 311 and the capacitance measurement device 312.

This allows for selective connection and disconnection of the capacitance measurement device 312 from the electrode 311, e.g., to disconnect the capacitance measurement device 312 after an initial capacitance measurement is performed. This can advantageously reduce an impact of the capacitance measurement device 312 (e.g., stray/parasitic current flow, parasitic capacitance etc.) on the device 400 during deployment, i.e., once the capacitance measurement is no longer required.

In some examples, a plurality of electrodes may be connected to a same capacitance measurement device by a respective intermediate switch. This allows a same capacitance measurement device to be separately connected (e.g., using a multiplexing approach) to different electrodes to determine the capacitance measure of different electrodes. This reduces the number of individual capacitance measurement devices that are required to determine a capacitance of different electrodes.

Accordingly, in some examples, the first set of electrodes comprises a plurality of electrodes each selectively connectable (e.g., via a multiplexing arrangement or similar) to the capacitance measurement device.

In some examples, the device may comprise a plurality of capacitance measurement devices. This allows for parallel determination of a measure of capacitance for multiple electrodes. In some instances, each electrode may be connectable (e.g., via respective intermediate switches) to more than one of the plurality of capacitance measurement devices. This allows for distributed control and selection over which capacitance measurement device(s) are used to determine the measure of capacitance, e.g., allowing for redundancy if there is an error in a capacitance measurement device and/or cross-confirmation of a measure of capacitance.

Fig. 5 illustrates a portion of another example of a proposed device 500 for trapping one or more ions.

In this example, the integrated circuit 310 further comprises, for each electrode of the first set, a respective switching device S1, S2, ..., SN for controlling a connection between one or more signal lines SL1, SL2, ..., SLN and the electrode. The operation of the switching device(s) may be controlled by a switch arrangement (not visible in Fig. 5).

More particularly, in the illustrated example, the one or more signal lines SL1, SL2, ..., SLN comprises a plurality of signal lines. Thus, the switching devices S1, S2, ..., SN effectively define a multiplexing arrangement between a plurality of voltage sources 321, 322, ..., 32N of a voltage control arrangement 320 and the electrode 311. However, this is not essential, and in some examples each electrode 311 may be selectively connectable to only a single signal line via a respective switching device.

This approach may advantageously allow for more precise control over the voltage provided to the electrode 311.

In the context of the first capacitance measurement process previously described, the use of the switching devices facilitates ease of applying an initial voltage and the voltage signal (having a different voltage to the electrode), e.g., through appropriate control of the voltage(s) applied by the voltage sources and switching of the switching devices. The switching device(s) also provide a slight increase to the finite resistance between the voltage control arrangement and the electrode 311.

Of course, where the first set of electrodes comprises a plurality of electrodes, then each electrode may be connectable to a same set of one or more signal lines (and therefore a same set of voltage sources) via respective sets of switching devices. Thus, there may be a multiplexing arrangement between each voltage source and each electrode.

Although not illustrated in Fig. 5, each of the first set of electrodes may be selectively connectable (e.g., via a respective intermediate switch) to the capacitance measurement device 312.

Similarly, the capacitance measurement device may comprise an analogue-to-digital converter and/or a comparator, which may function in a similar way to that previously described.

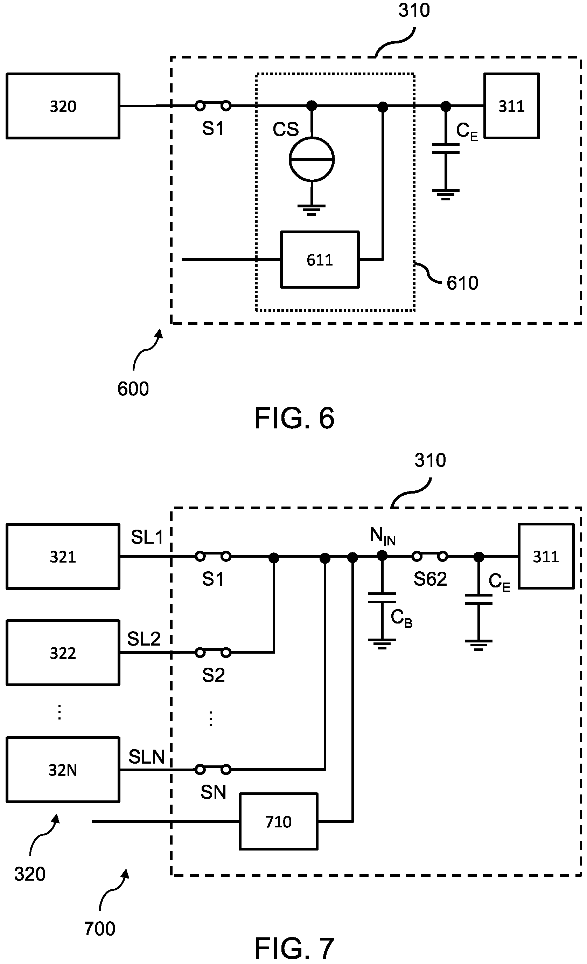

Fig. 6 illustrates a portion of another example of a proposed device 600 for trapping one or more ions.

In the illustrated example, each electrode 311 of the first set of electrodes is connectable to a (single) signal line provided by the voltage control arrangement 320 (e.g., a single voltage source) by a switching device S1. This allows each electrode 311 to be electrically isolated from the voltage control arrangement 320.

In other variants, each electrode of the first set of electrodes is connectable to respective signal lines provided by (e.g., respective voltage sources of) the voltage control arrangement 320 (e.g., a single voltage source) by respective switching devices. This approach also allows each electrode 311 to be electrically isolated from the voltage control arrangement. Further advantages of this approach have been previously described.

The device 600 comprises a capacitance measurement device 610 for use in performing a second capacitance measurement process. However, it will be appreciated that the capacitance measurement device 610 may also/otherwise be configured for use in performing the first capacitance measurement process (previously described).

More particularly, the capacitance measurement device 610 comprises a current source device CS configured to controllably apply a known current to each electrode 311 of the first set of electrodes. Embodiments of (controllable) current source devices are well known in the art. The capacitance measurement device 610 also comprises a voltage monitor 611.

A second capacitance measurement process for determining the capacitance of an electrode 311 (e.g., one of the first set of electrodes) for the illustrated device 600 is hereafter described. In this approach, the voltage control arrangement 320 and the capacitance measurement device 610 cooperate to produce the measure of capacitance.

The second capacitance measurement process comprises performing the following in sequence: using the voltage control arrangement to set a voltage at the electrode to a predetermined voltage (a fourth voltage); applying, using the current source device, the known current to the electrode for a period of time; using the capacitance measurement device to measure (as a fifth voltage) the voltage at the electrode; and using the capacitance measurement device to determine the measure of capacitance using at least the fifth voltage.

The second capacitance measurement process recognizes that the value of the voltage of the electrode, with respect to time elapsed since applying the known current, will vary dependent upon the capacitance of the electrode, as $C.\Delta V = I_K.\Delta t$, where C is capacitance, $\Delta V$ is the change in voltage across the capacitor, $I_K$ is the applied (known) current and $\Delta t$ is the elapsed period of time.

The value of the fifth voltage itself may function as the capacitance measure. In particular the value of the fifth voltage after a predetermined period of time will vary responsive to the capacitance of the electrode and is therefore able to represent the capacitance measure. Thus, the measure of capacitance can be defined by the value of the fifth voltage after a predetermined period of time after starting to apply the known current to the electrode. The capacitance measurement device may, for instance, comprise a sampler configured to sample the value of the fifth voltage or a signal derived therefrom to determine an indicator of a capacitance of the electrode.

Alternatively, the length of time taken for the value of the fifth voltage to reach a predetermined voltage may function as the capacitance measure. In particular, the difference between the fourth voltage and the fifth voltage may be predetermined, and the length of time taken for the measured voltage to reach the fifth voltage may represent the capacitance measure.

As yet another alternative, the value of the known current $I_K$, the duration $\Delta t$ of the period of time (whether predetermined or not), the value of the fourth voltage $V_4$ and the value of the fifth voltage $V_5$ can be processed to define a more accurate measure of the capacitance of the electrode. The value of $\Delta t$ is equal to a time at which the fifth voltage $V_5$ is measured and a time at which the fourth voltage $V_4$ is measured, i.e., the duration of the period of time.

In particular, assuming that no other capacitor(s) are connected to the electrode, the capacitance $C_{el}$ of the electrode can be calculated using the following equation:

$$C_{el} = \frac{I_K \Delta t}{V_5 - V_4} \qquad (1)$$

If one or more capacitors are connected to the electrode, then the capacitance of these capacitors should be subtracted from the value of $\frac{I_K \Delta t}{V_5 - V_4}$ to produce the capacitance of the electrode, as later exemplified.

Preferably, after setting the voltage at the electrode to the predetermined/fourth voltage, the voltage control arrangement is disconnected from the electrode 311, e.g., using the switching device(s).

Nonetheless, the second capacitance measurement process may be performed even in the absence of a respective switching device (or switching devices) connected between each electrode 311 and the voltage control arrangement. In such an approach, after setting the voltage level at the electrode to the predetermined voltage (fourth voltage), the voltage control arrangement should provide a high-impedance (hi-Z) output to the electrode.

The capacitance measurement device may comprise an analogue-to-digital converter and/or comparator. The function of these elements in the context of the first capacitance measurement process have been previously described.

In the context of the second capacitance measurement process, the analogue-to-digital converter may be configured to receive, as input, an analogue signal representing the voltage at the electrode (or at a wired connection that should be connected to the electrode). This is converted into a digital representation of the voltage. This digital representation of the voltage may itself represent the measure of capacitance. More particularly, the measure of capacitance may be defined as the digital representation of a value of the voltage at a predetermined period of time after starting to apply the known current to the electrode. Alternatively, the digital representation of the voltage may be further (digitally) processed to produce the measure of capacitance, e.g., using previously described approaches (e.g., with reference to at least equation (1)).

In the context of the second capacitance measurement process, the comparator may be configured to compare the voltage at the electrode (or at a wired connection that should be connected to the electrode), which represents the measure of capacitance, to a reference measure of capacitance (i.e., a reference voltage). This generates a binary indicator that indicates whether or not the measure of capacitance breaches the reference measure of capacitance. It will be appreciated that by appropriate selection of the reference voltage and sampling the binary indicator at a predetermined period of time after starting to apply the known current to the electrode, the sample of the binary indicator can indicate whether or not there is a fault in the electrode. In particular, the reference voltage may be selected to correspond to an expected voltage that would be present if there were no fault(s) in the electrode - which can be determined in advance.

Fig. 7 illustrates a portion of another example of a proposed device 700 for trapping one or more ions.

In the illustrated example, each electrode 311 of the first set of electrodes is connectable to one or more signal lines SL1, SL2, ..., SLN via a respective switching device S1, S2, ..., SN, S62. Here, the switching device comprises one or more first switches S1, S2, ..., SN (which can be alternatively labelled a primary or main switch) controllably connecting a respective, different one of the one or more signal lines to a same intermediate node $N_{IN}$ for the electrode 311. Thus, each first switch of the switching device for an electrode controls a current flow from a respective signal line (e.g., provided by a respective voltage source 321, 322, ..., 32N) to a same, shared intermediate node $N_{IN}$ for the electrode 311

Although the illustrated example provides an embodiment in which the intermediate node $N_{IN}$ for each electrode 311 of the first set of electrodes is connectable to a plurality of signal lines SL1, SL2, ..., SLN via respective first switches, it will be appreciated that in some examples only a single signal line is connectable to the intermediate node $N_{IN}$ for the electrode via a single first switch.

The switching device S1, S2, ..., SN, S62 further comprises a second switch S62 that controllably connects the intermediate node $N_{IN}$ to the electrode 311. Thus, the second switch controls a current flow from the intermediate node $N_{IN}$ to the electrode 311. Alternative labels for the second switch S62 include an isolating switch or a decoupling switch.

The intermediate node $N_{IN}$ is associated with a capacitance. In the illustrated example, the integrated circuit 310 comprises a buffer capacitor $C_B$ connecting the intermediate node to a ground or reference, which defines the capacitance of the buffer capacitor. In other examples, the buffer capacitor $C_B$ may be omitted, e.g., such that the intrinsic or parasitic capacitance at the intermediate node functions as the capacitance of the intermediate node. In other words, a parasitic capacitance as the intermediate node may perform the same/similar function to the dedicated buffer capacitor $C_B$.

Although not illustrated, a control arrangement may be configured to controllably close and open each switch of the switching device. The control arrangement is also configured to control a voltage on each one or more signal lines, e.g., by controlling or defining the operation of the voltage control arrangement (e.g., which may be formed as an aspect of the control arrangement).

The device 700 comprises a capacitance measurement device 710 for use in performing a third capacitance measurement process with the device 700. Nonetheless, it will be appreciated that the capacitance measurement device 710 may also/otherwise be configured for use in performing the first capacitance measurement process and/or the second capacitance measurement process (e.g., if comprising an (optional) current source device). In particular, if performing the second capacitance measurement process and a capacitance of the electrode is calculated using equation (1), then the capacitance of the buffer capacitor $C_B$ and/or at the intermediate node may be subtracted from the value of $\frac{I_K \Delta t}{V_5 - V_4}$ to produce the capacitance of the electrode.

The third capacitance measurement process for determining the capacitance of an electrode 311 (e.g., one of the first set of electrodes) for the illustrated device 600 is hereafter described. In this approach, the control arrangement (not illustrated) and the capacitance measurement device 710 cooperate to produce the measure of capacitance.

The third capacitance measurement process comprises sequentially performing steps of: using the control arrangement to control the second switch to be closed; using the control arrangement to set a voltage at the intermediate node for the electrode (and therefore the electrode itself) to a first voltage; using the control arrangement to control the second switch to be open; using the control arrangement or the capacitance measurement device to set a voltage at the intermediate node for the electrode to a second voltage, different to the first voltage; using the control arrangement to control each first switch to be open; using the control arrangement to control the second switch to be closed; using the capacitance measurement device to measure as a third voltage, the voltage at the intermediate node; and using the capacitance measurement device to define the measure of capacitance using at least the third voltage.

The third capacitance measurement process relies upon a concept of charge redistribution or balancing to produce a measure of capacitance. In particular, the value of the third voltage (for fixed values of the first and second voltages) will vary dependent upon the capacitance of the electrode.

As such, the third voltage may itself represent the measure of the capacitance of the electrode. This can be useful, for instance, for providing a low resource approach to generating an indicator of capacitance if the capacitance measurement device comprises a comparator (as later detailed). In particular, if the first voltage, the second voltage and the capacitance at the intermediate node are well defined (e.g., fixed), then the value of the third voltage will change only dependent upon the capacitance of the electrode.

However, in some examples, the capacitance measurement device is configured to determine the measure of capacitance using the first voltage, the second voltage and the third voltage.

In particular, the measure of capacitance may be determined using $\frac{|V_2 - V_3|}{|V_1 - V_3|}$, $V_1$ is the first voltage, $V_2$ is the second voltage and $V_3$ is the third voltage. This produces a measure of capacitance that is proportional to the true capacitance at the electrode.

For a more accurate identification of the capacitance at the electrode, the capacitance measurement device may be configured to determine the measure of capacitance further using a predefined capacitance at the intermediate node. This predefined capacitance may be defined or known in advance (e.g., for a known component value of the buffer capacitor).

More particularly, the capacitance measurement device may be configured to determining the measure of capacitance using the following equation:

$$C_{el} = C_{int} \frac{|V_2 - V_3|}{|V_1 - V_3|} \qquad (2)$$

wherein $C_{el}$ is the measure of capacitance of the electrode, $C_{int}$ is the predefined capacitance at the intermediate node (e.g., the capacitance of the buffer capacitor $C_b$ and/or a parasitic capacitance at the intermediate node), $V_1$ is the first voltage, $V_2$ is the second voltage and $V_3$ is the third voltage.

For each electrode of the first set, one approach to setting the voltage at the intermediate node $N_{INT}$ to a second voltage is to apply the second voltage using the voltage control arrangement 320, e.g., by controlling a first switch S1, S2, ..., SN to connect to a voltage source providing the second voltage. Thus, this may be performed by controlling the one or more first switches to set the voltage at the intermediate node to a voltage of one of the one or more signal lines.

An alternative approach is to partially drain the voltage at the intermediate node, e.g., using a drain switch connected between the intermediate node and a ground or reference voltage (e.g., bypassing or shorting the buffer capacitor $C_B$ if present).

For each electrode of the first set, one approach to setting the voltage at the intermediate node $N_{INT}$ to a first voltage is to use the control arrangement to control the one or more first switches to set the voltage at the intermediate node to a voltage of one of the one or more signal lines.

The capacitance measurement device may comprise an analogue-to-digital converter and/or comparator. The function of these elements in the context of the first capacitance measurement process and/or second capacitance measurement process have been previously described.

In the context of the third capacitance measurement process, the analogue-to-digital converter may be configured to receive, as input, an analogue signal representing the voltage at the intermediate node. This signal can be monitored and sampled when appropriate to produce a digital representation of the third voltage. This digital representation of the voltage may itself represent the measure of capacitance. Alternatively, the digital representation of the third voltage may be further (digitally) processed to produce the measure of capacitance, e.g., using previously described approaches (e.g., with reference to at least equation (2)).

In the context of the third capacitance measurement process, the comparator may be configured to compare the voltage at the intermediate node (which represents a measure of capacitance) to a reference measure of capacitance (i.e., a reference voltage). This generates a binary indicator that indicates whether or not the measure of capacitance breaches the reference measure of capacitance. It will be appreciated that by appropriate selection of the reference voltage and sampling the binary indicator after the third voltage has settled, the sample of the binary indicator can indicate whether or not there is a fault in the electrode. In particular, the reference voltage may be selected to correspond to an expected voltage that would be present if there were no fault(s) in the electrode - which can be determined in advance.

In some examples, the design for the switching device illustrated by Figure 7 may be exploited for reducing or avoiding charge injection towards the electrode during an operation of the device 700. In particular, if there is an indication to open (a closed) one of the first switches S1, S2, ..., SN for the electrode 311, then the second switch S62 may be opened before opening the first switch. In this way, the intermediate node $N_{IN}$ is isolated or decoupled from the electrode 311 before the (indicated) first switch is opened. Thus, the second switch S62 acts as an isolating or decoupling switch. This approach reduces or avoids any charge injection that results from a deactivation of the first switch from passing through to the electrode. This significantly reduces any (sudden) change in voltage at the electrode 311.

More particularly, the proposed approach acts to decouple the electrode 311 from the first switch(es) before opening or closing any one of the first switches. More particularly, to disconnect a signal line from the electrode 311, first, the second switch is opened to isolate the first switch(es), then, the relevant first switch is opened. This will lead to charge injection into the intermediate node between the first switch(es) and the second switch.

It is recognized that the voltage at this node will change which may disadvantageously couple capacitively to the electrode (e.g., via the drain-source capacitance of the second switch) and/or damage the second switch. The provision of the optional buffer capacitor $C_B$ connected to the intermediate node limits the voltage rise at the intermediate node.

In all above described embodiments, the device comprises a single capacitance measurement device. However, the skilled person will appreciate that the device may comprise a plurality of capacitance measurement devices. Each capacitance measurement device may, for instance, be connectable (e.g., by a multiplexing arrangement) to each of a respective set of electrodes. Each respective set of electrodes may at least partially overlap one another or be distinct and separate from one another, i.e., each set of electrodes may comprise one or more electrodes from one or more other sets of electrodes.

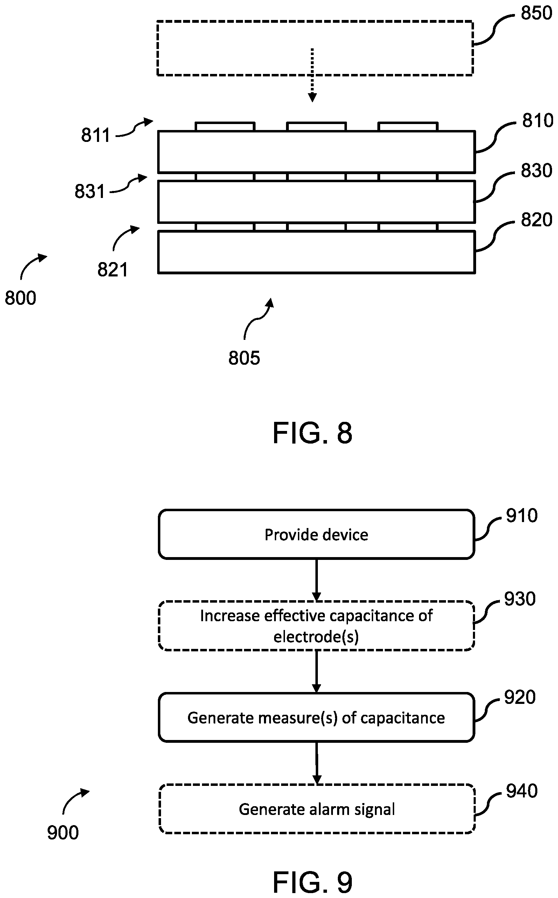

Figure 8 schematically illustrates a portion of a structure of a proposed device 800 for trapping one or more ions. The proposed device may be embodied as previously described.

In embodiments, the proposed device comprises an integrated circuit 805 formed of a plurality of layers, each defined by a separate substrate. For example, the integrated circuit may be a three dimensional integrated circuit. The plurality of electrodes 811 are mounted on a first substrate 810 (defining a first layer) and a second substrate 820 mounts electronic circuitry 821 comprising at least the capacitance measurement device and (if present) the switching device(s). More particularly, the electronic circuitry comprises one or more signal lines that each carry a respective voltage signal for application to one or more of the electrodes 811.

In preferred examples, only a single electrical connection (e.g., a single interconnect or similar) connects between the electrode and the electronic circuitry mounted on the second substrate. This significantly reduces a number of interconnects between different layers of the integrated circuit, facilitating increased density of electrodes for more granular control over the position of any ions trapped using the device 800.

More particularly, each electrode is preferably connected via only a single electrical connection to any other layer of the integrated circuit or any other component of the integrated circuit.

In some embodiments, the device 800 further comprises a third substrate 830 mounting an electrode capacitor 831 for each of the plurality of electrodes. The third substrate is positioned between the first substrate and the second substrate.

The previous description provides a number of mechanisms and/or approaches for generating a measure of capacitance for each of a first set of a plurality of electrodes. The proposed approaches (e.g., the first capacitance measurement process, the second capacitance measurement process and the third capacitance measurement process) are each considered to, by themselves, represent embodiments of the invention.

The skilled person would readily appreciate a variety of other approaches that may be performed for determining a measure of capacitance for each of a first set of electrodes.

Thus, there is correspondingly proposed a method for generating a measure of capacitance for each of a first set of the plurality of electrodes of any herein proposed device, wherein the method comprises providing the proposed device; and generating the measure of capacitance for each of the first set of the plurality of electrodes using the capacitance measurement device of the device (e.g., performing the first, second and/or third capacitance measurement process herein described).

Figure 9 is a flowchart illustrating a proposed method 900 for generating a measure of capacitance for each of a first set of the plurality of electrodes of a herein device.

The method 900 comprises a step 910 of providing any herein proposed device. Suitable examples of the proposed device have been described in detail.

The method 900 further comprises generating 920 the measure of capacitance for each of the first set of the plurality of electrodes using the capacitance measurement device of the device. A wide variety of methods and approaches for performing this procedure have been previously described, e.g., the first capacitance measurement process, the second capacitance measurement process and/or the third capacitance measurement process.

The method 900 may comprise a step 930 of increasing the effective capacitance of each of a first set of the plurality of electrodes, which is performed before step 920. Increasing the effective capacitance of each of the plurality of electrodes reduces a likelihood that an electrode having a capacitance that is, in practice, within acceptable manufacturing tolerance will be misinterpreted as a failed electrode or vice versa.

Step 930 is particularly advantageous when the capacitance of the electrode is small compared to a combined capacitance between the electrode and the capacitor measurement device, in which other capacitances may mask the capacitance of the electrode. This may, for instance, occur when the electrode is positioned on a different layer of the integrated circuit to the capacitor measurement device.

Nonetheless, it will be appreciated that step 930 may be omitted in some examples.

Step 930 may be performed by, for instance, moving a separate ground plane and/or capacitive element into proximity with the plurality of electrodes of the device. The separate ground plane and/or capacitive element may be provided by a separate element to the device. This increases the parasitic capacitance between the electrode(s) and a ground.

This is conceptually illustrated in Fig. 8, which illustrates a separate ground plane 850 moving into proximity with the plurality of electrodes 811 of the device 800.

Turning back to Fig. 9, another approach for performing step 930 is to apply an electromagnetic field to the first set of electrodes, which will effectively inject a high voltage into each electrode and increase its relative capacitance. This can be performed, for instance, using one or more other electrodes (outside of the first set of electrodes) of the device and/or using electrodes mounted on a separate element or device that is brought into close proximity with the plurality of electrodes.

Other approaches for (temporarily) increasing the effective capacitance of an electrode will be readily apparent to the skilled person.

The method 900 may further comprise a step of generating an alarm signal 940 responsive to each measure of capacitance. The alarm signal may indicate whether or not any measure of capacitance aligns with or deviates from a respective reference measure of capacitance. Each reference measure of capacitance may represent an expected value for the respective measure of capacitance in the absence of any faults. Any deviation(s) from the reference measure(s) of capacitance therefore indicates a potential fault in the first set of electrodes.

Step 940 may be performed by a component external to the device, e.g., a processor electrically connected to the capacitance measurement device(s) of the device.

In addition to the above-described examples, the following examples are disclosed.

Example 1: A device for trapping one or more ions comprising an integrated circuit comprising:

a plurality of electrodes controllable, using one or more applied voltages, for positioning the one or more ions with respect to the device; and
a capacitance measurement device electrically connected or connectable to each electrode of a first set of the plurality of electrodes and configured to generate, for each electrode of the first set of the plurality of electrodes, a measure of capacitance for the electrode.

Example 2: The device of example 1, wherein the measure of capacitance is a digital measure of capacitance.

Example 3: The device of example 1 or 2, further comprising a comparator configured to, for each electrode of the first set, compare the measure of capacitance to a reference measure of capacitance and generate a binary indicator that indicates whether or not the measure of capacitance breaches the reference measure of capacitance.

Example 4: The device of any one of examples 1 to 3, wherein the integrated circuit further comprises, for each electrode of the first set, a respective switching device for controlling a connection between one or more signal lines and the electrode.

Example 5: The device of example 4, wherein the integrated circuit comprises:

a first substrate configured to mount the plurality of electrodes; and
a second substrate, different to the first substrate, configured to mount electronic circuitry comprising each switching device and the capacitance measurement device.

Example 6: The device of example 5, wherein, for each electrode, only a single electrical connection connects between the electrode and the electronic circuitry mounted on the second substrate.

Example 7: The device of any one of examples 4 to 6, wherein:

for each electrode of the first set, the respective switching device comprises:

one or more first switches, each first switch controllably connecting a respective, different one of the one or more signal lines to a same intermediate node for the electrode of the first set; and
a second switch controllably connecting the intermediate node for the electrode of the first set to the electrode; and

the device further comprises a control arrangement configured to control a voltage on each one or more signal lines and the operation of each switching device,
wherein the control arrangement and capacitance measurement device are configured to, for each electrode of the first set, generate the measure of capacitance by sequentially performing:

a first step, using the control arrangement, of controlling the second switch to be closed;
a second step, using the control arrangement, of setting a voltage at the intermediate node for the electrode to a first voltage;
a third step, using the control arrangement, of controlling the second switch to be open;
a fourth step, using the control arrangement or the capacitance measurement device, of setting a voltage at the intermediate node for the electrode to a second voltage, different to the first voltage;
a fifth step, using the control arrangement, of controlling each first switch to be open;
a sixth step, using the control arrangement, of controlling the second switch to be closed;
a seventh step, using the capacitance measurement device, of measuring, as a third voltage, the voltage at the intermediate node; and
an eighth step, using the capacitance measurement device, of defining the measure of capacitance using at least the third voltage.

Example 8: The device of example 7, wherein the eighth step comprises, using the capacitance measurement device, determining the measure of capacitance using the first voltage, the second voltage and the third voltage.

Example 9: The device of example 8, wherein the eighth step comprises, using the capacitance measurement device, determining the measure of capacitance further using a predefined capacitance at the intermediate node.

Example 10: The device of example 9, wherein the eighth step comprises, using the capacitance measurement device, determining the measure of capacitance using the following equation: $C_{el} = C_{int} \frac{|V_2 - V_3|}{|V_1 - V_3|}$, wherein $C_{el}$ is the measure of capacitance of the electrode, $C_{int}$ is the predefined capacitance at the intermediate node, $V_1$ is the first voltage, $V_2$ is the second voltage and $V_3$ is the third voltage.

Example 11: The device of any one of examples 7 to 10, wherein:

the second step comprises using the control arrangement to control the one or more first switches to set the voltage at the intermediate node to a voltage of one of the one or more signal lines; and/or
the fourth step comprises using the control arrangement to control the one or more first switches to set the voltage at the intermediate node to a voltage of one of the one or more signal lines.

Example 12: The device of any one of examples 1 to 6, wherein:

the capacitance measurement device comprises a current source device configured to controllably apply a known current to each electrode of the first set of electrodes;
the device comprises a first voltage control arrangement configured to control a voltage applied to each electrode of the first set of electrodes; and
the first voltage control arrangement and capacitance measurement device are configured to, for each electrode of the first set, generate the measure of capacitance by sequentially performing:

a ninth step of using the first voltage control arrangement to set a voltage at the electrode to a fourth voltage;
a tenth step of applying, using the current source device, the known current to the electrode for a period of time;
an eleventh step of using the capacitance measurement device to measure, as a fifth voltage, the voltage at the electrode; and
a twelfth step of using the capacitance measurement device to determine the measure of capacitance using at least the fifth voltage.

Example 13: The device of example 12, wherein the twelfth step comprises determining the measure of capacitance using the known current, the duration of the period of time, the fourth voltage and the fifth voltage.

Example 14: The device of example 12 or 13, wherein the period of time has a predetermined duration.

Example 15: The device of example 12 or 13, wherein the difference between the fourth voltage and the fifth voltage is predetermined.

Example 16: The device of any one of examples 1 to 6, wherein:

the device comprises a second voltage control arrangement configured to control a voltage applied to each electrode of the first set of electrodes
the second voltage control arrangement and the capacitance measurement device are configured to, for each electrode of the first set, generate the measure of capacitance by sequentially performing:

a thirteenth step of defining, as an initial voltage, a voltage at the electrode;
a fourteenth step of using the second voltage control arrangement to apply a voltage signal to the electrode, the voltage signal having a different voltage to the initial voltage; and
a fifteenth step of using the capacitance measurement device to define, as the measure of capacitance, a value responsive to a length of time taken for the voltage at the electrode to follow the voltage of the applied voltage signal.

Example 17: The device of example 16, wherein the capacitance measurement device is configured to, for each electrode of the first set, in the fifteenth step, the value is a measure of the length of time taken for the voltage at the electrode to reach a predetermined voltage having a value either between the initial voltage and the voltage of the voltage signal or at the voltage of the voltage signal.

Example 18: The device of example 16, wherein, in the fifteenth step, the value is a measure of the voltage at the electrode after a predetermined length of time has elapsed since the fourteenth step was performed.

Example 19: The device of any one of examples 1 to 16, wherein the integrated device further comprises, for each electrode in the first set of electrodes, a respective intermediate switch connected between the electrode and the capacitance measurement device.

Example 20: A method for generating a measure of capacitance for each of a first set of the plurality of electrodes of a device of any one of examples 1 to 19, wherein the method comprises:

providing the device of any one of examples 1 to 19;
increasing the effective capacitance of the first set of the plurality of electrodes; and
generating the measure of capacitance for each of the first set of the plurality of electrodes using the capacitance measurement device of the device.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1.  A device for trapping one or more ions comprising an integrated circuit comprising:

a plurality of electrodes controllable, using one or more applied voltages, for positioning the one or more ions with respect to the device; and
a capacitance measurement device electrically connected or connectable to each electrode of a first set of the plurality of electrodes and configured to generate, for each electrode of the first set of the plurality of electrodes, a measure of capacitance for the electrode.

2.  The device of claim 1, wherein the measure of capacitance is a digital measure of capacitance.

3.  The device of claim 1 or 2, further comprising a comparator configured to, for each electrode of the first set, compare the measure of capacitance to a reference measure of capacitance and generate a binary indicator that indicates whether or not the measure of capacitance breaches the reference measure of capacitance.

4. The device of any one of claims 1 to 3, wherein the integrated circuit further comprises, for each electrode of the first set, a respective switching device for controlling a connection between one or more signal lines and the electrode.

5. The device of claim 4, wherein the integrated circuit comprises:

   a first substrate configured to mount the plurality of electrodes; and
   a second substrate, different to the first substrate, configured to mount electronic circuitry comprising each switching device and the capacitance measurement device.

6. The device of claim 5, wherein, for each electrode, only a single electrical connection connects between the electrode and the electronic circuitry mounted on the second substrate.

7. The device of any one of claims 4 to 6, wherein:

   for each electrode of the first set, the respective switching device comprises:

   one or more first switches, each first switch controllably connecting a respective, different one of the one or more signal lines to a same intermediate node for the electrode of the first set; and
   a second switch controllably connecting the intermediate node for the electrode of the first set to the electrode; and

   the device further comprises a control arrangement configured to control a voltage on each one or more signal lines and the operation of each switching device,
   wherein the control arrangement and capacitance measurement device are configured to, for each electrode of the first set, generate the measure of capacitance by sequentially performing:

   a first step, using the control arrangement, of controlling the second switch to be closed;
   a second step, using the control arrangement, of setting a voltage at the intermediate node for the electrode to a first voltage;
   a third step, using the control arrangement, of controlling the second switch to be open;
   a fourth step, using the control arrangement or the capacitance measurement device, of setting a voltage at the intermediate node for the electrode to a second voltage, different to the first voltage;
   a fifth step, using the control arrangement, of controlling each first switch to be open;
   a sixth step, using the control arrangement, of controlling the second switch to be closed;
   a seventh step, using the capacitance measurement device, of measuring, as a third voltage, the voltage at the intermediate node; and
   an eighth step, using the capacitance measurement device, of defining the measure of capacitance using at least the third voltage.

8. The device of claim 7, wherein the eighth step comprises, using the capacitance measurement device, determining the measure of capacitance using the first voltage, the second voltage and the third voltage.

9. The device of claim 8, wherein the eighth step comprises, using the capacitance measurement device, determining the measure of capacitance further using a predefined capacitance at the intermediate node, and/or
   wherein the eighth step comprises, using the capacitance measurement device, determining the measure of capacitance using the following equation: $C_{el} = C_{int} \frac{|V_2 - V_3|}{|V_1 - V_3|}$, wherein $C_{el}$ is the measure of capacitance of the electrode, $C_{int}$ is the predefined capacitance at the intermediate node, $V_1$ is the first voltage, $V_2$ is the second voltage and $V_3$ is the third voltage.

10. The device of any one of claims 7 to 9, wherein:

   the second step comprises using the control arrangement to control the one or more first switches to set the voltage at the intermediate node to a voltage of one of the one or more signal lines; and/or

the fourth step comprises using the control arrangement to control the one or more first switches to set the voltage at the intermediate node to a voltage of one of the one or more signal lines.

11. The device of any one of claims 1 to 6, wherein:

the capacitance measurement device comprises a current source device configured to controllably apply a known current to each electrode of the first set of electrodes;
the device comprises a first voltage control arrangement configured to control a voltage applied to each electrode of the first set of electrodes; and
the first voltage control arrangement and capacitance measurement device are configured to, for each electrode of the first set, generate the measure of capacitance by sequentially performing:

a ninth step of using the first voltage control arrangement to set a voltage at the electrode to a fourth voltage;
a tenth step of applying, using the current source device, the known current to the electrode for a period of time;
an eleventh step of using the capacitance measurement device to measure, as a fifth voltage, the voltage at the electrode; and
a twelfth step of using the capacitance measurement device to determine the measure of capacitance using at least the fifth voltage.

12. The device of claim 11, wherein the twelfth step comprises determining the measure of capacitance using the known current, the duration of the period of time, the fourth voltage and the fifth voltage.

13. The device of claim 11 or 12, wherein the period of time has a predetermined duration, or wherein the difference between the fourth voltage and the fifth voltage is predetermined.

14. The device of any one of claims 1 to 6, wherein:

the device comprises a second voltage control arrangement configured to control a voltage applied to each electrode of the first set of electrodes
the second voltage control arrangement and the capacitance measurement device are configured to, for each electrode of the first set, generate the measure of capacitance by sequentially performing:

a thirteenth step of defining, as an initial voltage, a voltage at the electrode;
a fourteenth step of using the second voltage control arrangement to apply a voltage signal to the electrode, the voltage signal having a different voltage to the initial voltage; and
a fifteenth step of using the capacitance measurement device to define, as the measure of capacitance, a value responsive to a length of time taken for the voltage at the electrode to follow the voltage of the applied voltage signal.

15. The device of claim 14, wherein the capacitance measurement device is configured to, for each electrode of the first set, in the fifteenth step, the value is a measure of the length of time taken for the voltage at the electrode to reach a predetermined voltage having a value either between the initial voltage and the voltage of the voltage signal or at the voltage of the voltage signal, or
wherein, in the fifteenth step, the value is a measure of the voltage at the electrode after a predetermined length of time has elapsed since the fourteenth step was performed.

16. The device of any one of claims 1 to 14, wherein the integrated device further comprises, for each electrode in the first set of electrodes, a respective intermediate switch connected between the electrode and the capacitance measurement device.

17. A method for generating a measure of capacitance for each of a first set of the plurality of electrodes of a device of any one of claims 1 to 16, wherein the method comprises:

providing the device of any one of claims 1 to 16;
increasing the effective capacitance of the first set of the plurality of electrodes; and
generating the measure of capacitance for each of the first set of the plurality of electrodes using the capacitance measurement device of the device.

FIG. 1

FIG. 2

FIG. 3

FIG. 4

FIG. 5

310

320 | S1 CS | C_E | 311

611 610

600

## FIG. 6

310

321 | SL1 | S1 | N_IN | S62 | C_E | 311

322 | SL2 | S2

⋮ ⋮

32N | SLN | SN

C_B

710

320

700

## FIG. 7

850

811 810

831 830

821 820

800

805

# FIG. 8

910 Provide device

930 Increase effective capacitance of electrode(s)

920 Generate measure(s) of capacitance

940 Generate alarm signal

900

# FIG. 9

**EUROPEAN SEARCH REPORT**

Application Number

EP 24 19 8949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 033 528 A1 (HONEYWELL INT INC [US]) 27 July 2022 (2022-07-27) | 1,4-6, 16,17 | INV. G21K1/00 |
| A | * paragraphs [0019], [0056], [0057]; figures 1, 3, 7A, 8A,B * | 7-15 | G06N10/40 |
| | ----- | | |
| X | EP 2 939 255 B1 (908 DEVICES INC [US]) 10 March 2021 (2021-03-10) | 1-3 | |
| A | * paragraphs [0050], [163.167]; figures 1E, 3A, 4A-E * | 7-15 | |
| | ----- | | |
| A | WO 2023/007189 A1 (UNIVERSAL QUANTUM LTD [GB]) 2 February 2023 (2023-02-02) * page 4, lines 18-20 * | 1-17 | |
| | ----- | | |
| A | WO 2017/194333 A1 (ZEISS CARL SMT GMBH [DE]) 16 November 2017 (2017-11-16) * page 4, lines 22-29 * | 1-17 | |
| | ----- | | |

TECHNICAL FIELDS SEARCHED (IPC)

H01L
H01J
H03M
G21K
G06N

The present search report has been drawn up for all claims

| Place of search | Date of completion of the search | Examiner |
|---|---|---|
| Munich | 10 February 2025 | Sewtz, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8949

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | | Publication date | Patent family member(s) | | Publication date |
|---|---|---|---|---|---|
| EP 4033528 | A1 | 27-07-2022 | CN | 114093549 A | 25-02-2022 |
| | | | EP | 4033528 A1 | 27-07-2022 |
| | | | US | 2022037313 A1 | 03-02-2022 |
| EP 2939255 | B1 | 10-03-2021 | CN | 105009250 A | 28-10-2015 |
| | | | CN | 107946166 A | 20-04-2018 |
| | | | CN | 111243938 A | 05-06-2020 |
| | | | CN | 116864367 A | 10-10-2023 |
| | | | EP | 2939255 A1 | 04-11-2015 |
| | | | JP | 6183929 B2 | 23-08-2017 |
| | | | JP | 2016510477 A | 07-04-2016 |
| | | | WO | 2014105089 A1 | 03-07-2014 |
| WO 2023007189 | A1 | 02-02-2023 | AU | 2022320974 A1 | 29-02-2024 |
| | | | CN | 117940938 A | 26-04-2024 |
| | | | EP | 4377851 A1 | 05-06-2024 |
| | | | GB | 2609613 A | 15-02-2023 |
| | | | JP | 2024527166 A | 19-07-2024 |
| | | | US | 2024419207 A1 | 19-12-2024 |
| | | | WO | 2023007189 A1 | 02-02-2023 |
| WO 2017194333 | A1 | 16-11-2017 | DE | 102016208009 A1 | 16-11-2017 |
| | | | EP | 3455873 A1 | 20-03-2019 |
| | | | TW | 201805996 A | 16-02-2018 |
| | | | WO | 2017194333 A1 | 16-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEHAYIAS, PAULI et al.** Fault Localization in a Microfabricated Surface Ion Trap using Diamond Nitrogen-Vacancy Center Magnetometry. *arXiv preprint arXiv:2403.08731*, 2024